# EUROPEAN PATENT APPLICATION

(11) **EP 4 845 186 A1**
(43) Date of publication of application: **25.11.2026**
(21) Application number: 24925525.8
(22) Date of filing: 11.10.2024
(51) Int. Cl.: H04W 4/40

(54) **INTERNET-OF-VEHICLES TERMINAL, COMMUNICATION UNIT, AND VEHICLE**

(30) Priority: 23.02.2024 CN 202410204091
(71) Applicant: Huawei Technologies Co., Ltd., Shenzhen, Guangdong 518129 (CN)
(72) Inventor: GAO, Chunyu, Shenzhen, Guangdong 518129 (CN); YU, Jingjing, Shenzhen, Guangdong 518129 (CN); WANG, Jianqiang, Shenzhen, Guangdong 518129 (CN); HU, Rui, Shenzhen, Guangdong 518129 (CN)
(74) Representative: MERH-IP Matias Erny Reichl Hoffmann Patentanwälte PartG mbB
(86) International application number: PCT/CN2024/124163
(87) International publication number: WO 2025/175787

(57) **Abstract**

This application relates to the technical field of image processing, and in particular, to an Internet of Vehicles terminal, a communication unit, and a vehicle. Data that needs to be stored in a storage unit of the communication unit is split to obtain personalized data and common data of the communication unit. The personalized data of the communication unit is stored in the storage unit of the communication unit, and the common data of the communication unit is stored in a storage unit of the Internet of Vehicles terminal. In this way, only the personalized data of the communication unit is stored in the storage unit of the communication unit, and the communication unit only needs to be provided with a storage unit having a relatively small capacity, so that manufacturing costs of the communication unit can be reduced. In addition, the common data of the communication unit is stored in the storage unit of the Internet of Vehicles terminal, so that a capacity of the storage unit of the Internet of Vehicles terminal can be fully utilized, thereby reducing resource waste of the storage unit of the Internet of Vehicles terminal.

## Description

This application claims priority to Chinese Patent Application No. 202410204091.4, filed with the China National Intellectual Property Administration on February 23, 2024 and entitled "INTERNET OF VEHICLES TERMINAL, COMMUNICATION UNIT, AND VEHICLE", which is incorporated herein by reference in its entirety.

### TECHNICAL FIELD

This application relates to the field of communication technologies, and in particular, to an Internet of Vehicles terminal, a communication unit, and a vehicle.

### BACKGROUND

With the intelligent development of vehicles, more and more functional modules are deployed in the vehicle. These functional modules may be connected to a network to implement functions such as vehicle status sensing, fault diagnosis, and intelligent control. For example, the vehicle may include a telematics box (telematics box, TBox) and other electrical control units (electrical control units, ECUs). In an Internet of Vehicles scenario, the TBox can provide an Internet access capability for other ECUs in the vehicle.

In some specific implementations, an in-vehicle TBox may include a first storage unit and a communication unit. The first storage unit may be an embedded multimedia card (embedded multimedia card, eMMC). A capacity of the first storage unit may be a standard specification of 4 GB, 8 GB, 16 GB, or 32 GB. The first storage unit may store vehicle information (a vehicle identification number, a vehicle model, and the like), driving data (a driving speed, fuel consumption, and the like), and navigation data (such as current location data of the vehicle and historical driving trajectories). The communication unit may include a plurality of radio frequency components, a central processing unit, and a second storage unit. The second storage unit may store calibration parameters of the radio frequency components, a boot program (BOOT image) for booting the communication unit, a firmware software package, a system program, and the like.

The capacity of the first storage unit is generally a standard specification, and a capacity required by data such as the vehicle information, the driving data, and the navigation data is far less than the standard specification of the first storage unit. Therefore, storing only the data such as the vehicle information, the driving data, and the navigation data in the first storage unit may cause resource waste of the first storage unit.

### SUMMARY

To resolve the problem that storing only data such as vehicle information, driving data, and navigation data in a first storage unit may cause resource waste of the first storage unit, embodiments of this application provide an Internet of Vehicles terminal, a communication unit, and a vehicle.

According to a first aspect, this application provides an Internet of Vehicles terminal, where the Internet of Vehicles terminal includes a storage unit and a communication unit. The communication unit includes a storage subunit, the storage unit is configured to store first-type data of the communication unit, and the storage subunit is configured to store second-type data of the communication unit. The first-type data is used to boot the communication unit, and the second-type data is used to calibrate a first parameter of the communication unit to a second parameter.

Based on the foregoing solution, data that needs to be stored in the storage subunit of the communication unit is split, only the first-type data of the communication unit is stored in the storage subunit of the communication unit, and the communication unit only needs to be provided with a storage subunit having a relatively small capacity, so that manufacturing costs of the communication unit can be reduced. In addition, the second-type data of the communication unit is stored in the storage unit of the Internet of Vehicles terminal, so that a capacity of the storage unit of the Internet of Vehicles terminal can be fully utilized, thereby reducing resource waste of the storage unit of the Internet of Vehicles terminal.

In some optional examples, the storage unit is the first storage unit mentioned below, the storage subunit is the second storage unit mentioned below, the first-type data is the personalized data mentioned below, and the second-type data is the common data mentioned below.

In some optional examples, the storage unit may be an embedded multimedia card (embedded multimedia card, eMMC), and the capacity of the storage unit may be a standard specification of 4 GB, 8 GB, 16 GB, or 32 GB. The storage subunit may be a flash memory.

In some optional examples of the first aspect, the first-type data includes at least one of a boot program, firmware, or a system program of the communication unit, and the second-type data includes at least one of a transmit power calibration parameter, a receiver sensitivity calibration parameter, an error vector magnitude, and a baseband calibration parameter of the communication unit.

In some optional examples of the first aspect, in response to invoking the first-type data in the storage unit, the communication unit receives a radio frequency signal transmitted by a transmitting end; or the communication unit transmits a to-be-transmitted signal to a receiving end.

In some specific implementations, the Internet of Vehicles terminal further includes a processor, and the communication unit further includes a radio frequency component. When the processor loads and runs the first-type data from the storage unit, the communication unit is in an operating state. The radio frequency component is configured to receive a radio frequency signal transmitted by the transmitting end, perform filtering and demodulation processing on the radio frequency signal to obtain a baseband signal, and transmit the baseband signal to the processor. The processor is configured to generate data related to the baseband signal.

In some specific implementations, when the radio frequency signal is an image signal, the processor is configured to generate an image or a video.

In some specific implementations, the communication unit further includes a sub-processor. The radio frequency component is further configured to receive a to-be-transmitted signal transmitted by the sub-processor, perform encoding, modulation, and amplification processing on the to-be-transmitted signal to obtain a modulated signal, and transmit the modulated signal to the receiving end.

In the embodiments of this application, the first-type data is stored in the storage unit of the Internet of Vehicles terminal, so that reliance of the communication unit on the Internet of Vehicles terminal can be enhanced while manufacturing costs of the communication unit are reduced.

In some optional examples of the first aspect, the storage unit is further configured to store vehicle information, driving data, navigation data, an antenna resonance frequency threshold, and power management control logic.

In the embodiments of this application, the second-type data of the communication unit, the vehicle information, the driving data, the navigation data, the antenna resonance frequency threshold, and the power management control logic are stored in the storage unit of the Internet of Vehicles terminal, so that the capacity of the storage unit of the Internet of Vehicles terminal can be fully utilized, thereby reducing resource waste of the storage unit of the Internet of Vehicles terminal.

In some optional examples of the first aspect, in response to invoking the antenna resonance frequency threshold in the storage unit, the communication unit controls, based on the antenna resonance frequency threshold and a current resonance frequency of an antenna, the antenna to be disconnected or connected.

In the embodiments of this application, the second-type data of the communication unit, the vehicle information, the driving data, the navigation data, the antenna resonance frequency threshold, and the power management control logic are stored in the storage unit of the Internet of Vehicles terminal, so that reliance of the communication unit on the Internet of Vehicles terminal can be enhanced while the capacity of the storage unit of the Internet of Vehicles terminal is fully utilized and resource waste of the storage unit of the Internet of Vehicles terminal is reduced.

In some optional examples of the first aspect, in response to invoking the power management control logic in the storage unit, the communication unit is powered on, powered off, put into a sleep mode, or awakened.

In the embodiments of this application, the second-type data of the communication unit, the vehicle information, the driving data, the navigation data, the antenna resonance frequency threshold, and the power management control logic are stored in the storage unit of the Internet of Vehicles terminal, so that reliance of the communication unit on the Internet of Vehicles terminal can be enhanced while the capacity of the storage unit of the Internet of Vehicles terminal is fully utilized and resource waste of the storage unit of the Internet of Vehicles terminal is reduced.

According to a second aspect, this application provides a communication unit, where data related to the communication unit includes first-type data and second-type data. The first-type data is stored in a storage unit of an Internet of Vehicles terminal, and the first-type data is used to boot the communication unit. The communication unit includes a storage subunit, the storage subunit is configured to store the second-type data of the communication unit, and the second-type data is used to calibrate a first parameter of the communication unit to a second parameter.

Based on the foregoing solution, data that needs to be stored in the storage subunit of the communication unit is split, only the first-type data of the communication unit is stored in the storage subunit of the communication unit, and the communication unit only needs to be provided with a storage subunit having a relatively small capacity, so that manufacturing costs of the communication unit can be reduced.

In some optional examples, the storage unit is the first storage unit mentioned below, the storage subunit is the second storage unit mentioned below, the first-type data is the personalized data mentioned below, and the second-type data is the common data mentioned below.

In some optional examples, the storage unit may be an embedded multimedia card (embedded multimedia card, eMMC), and a capacity of the storage unit may be a standard specification of 4 GB, 8 GB, 16 GB, or 32 GB. The storage subunit may be a flash memory.

In some optional examples of the second aspect, the first-type data includes at least one of a boot program, firmware, or a system program of the communication unit, and the second-type data includes at least one of a transmit power calibration parameter, a receiver sensitivity calibration parameter, an error vector magnitude, and a baseband calibration parameter of the communication unit.

In some optional examples of the second aspect, in response to invoking the first-type data in the storage unit, the communication unit receives a radio frequency signal transmitted by a transmitting end; or the communication unit transmits a to-be-transmitted signal to a receiving end.

In some specific implementations, the Internet of Vehicles terminal further includes a processor, and the communication unit further includes a radio frequency component. When the processor loads and runs the first-type data from the storage unit, the communication unit is in an operating state. The radio frequency component is configured to receive a radio frequency signal transmitted by the transmitting end, perform filtering and demodulation processing on the radio frequency signal to obtain a baseband signal, and transmit the baseband signal to the processor. The processor is configured to generate data related to the baseband signal.

In some specific implementations, when the radio frequency signal is an image signal, the processor is configured to generate an image or a video.

In some specific implementations, the communication unit further includes a sub-processor. The radio frequency component is further configured to receive a to-be-transmitted signal transmitted by the sub-processor, perform encoding, modulation, and amplification processing on the to-be-transmitted signal to obtain a modulated signal, and transmit the modulated signal to the receiving end.

In the embodiments of this application, the first-type data is stored in the storage unit of the Internet of Vehicles terminal, so that reliance of the communication unit on the Internet of Vehicles terminal can be enhanced while manufacturing costs of the communication unit are reduced.

In some optional examples of the second aspect, the storage unit is further configured to store vehicle information, driving data, navigation data, an antenna resonance frequency threshold, and power management control logic.

In the embodiments of this application, the second-type data of the communication unit, the vehicle information, the driving data, the navigation data, the antenna resonance frequency threshold, and the power management control logic are stored in the storage unit of the Internet of Vehicles terminal, so that the capacity of the storage unit of the Internet of Vehicles terminal can be fully utilized, thereby reducing resource waste of the storage unit of the Internet of Vehicles terminal.

In some optional examples of the second aspect, in response to invoking the antenna resonance frequency threshold in the storage unit, the communication unit controls, based on the antenna resonance frequency threshold and a current resonance frequency of an antenna, the antenna to be disconnected or connected.

In the embodiments of this application, the second-type data of the communication unit, the vehicle information, the driving data, the navigation data, the antenna resonance frequency threshold, and the power management control logic are stored in the storage unit of the Internet of Vehicles terminal, so that reliance of the communication unit on the Internet of Vehicles terminal can be enhanced while the capacity of the storage unit of the Internet of Vehicles terminal is fully utilized and resource waste of the storage unit of the Internet of Vehicles terminal is reduced.

In some optional examples of the second aspect, in response to invoking the power management control logic in the storage unit, the communication unit is powered on, powered off, put into a sleep mode, or awakened.

In the embodiments of this application, the second-type data of the communication unit, the vehicle information, the driving data, the navigation data, the antenna resonance frequency threshold, and the power management control logic are stored in the storage unit of the Internet of Vehicles terminal, so that reliance of the communication unit on the Internet of Vehicles terminal can be enhanced while the capacity of the storage unit of the Internet of Vehicles terminal is fully utilized and resource waste of the storage unit of the Internet of Vehicles terminal is reduced.

According to a third aspect, embodiments of this application provide a vehicle, where the vehicle includes an Internet of Vehicles terminal, and the Internet of Vehicles terminal includes a storage unit and a communication unit. The communication unit includes a storage subunit, the storage unit is configured to store first-type data of the communication unit, and the storage subunit is configured to store second-type data of the communication unit. The first-type data is used to boot the communication unit, and the second-type data is used to calibrate a first parameter of the communication unit to a second parameter.

Based on the foregoing solution, data that needs to be stored in the storage subunit of the communication unit is split, only the first-type data of the communication unit is stored in the storage subunit of the communication unit, and the communication unit only needs to be provided with a storage subunit having a relatively small capacity, so that manufacturing costs of the communication unit can be reduced. In addition, the second-type data of the communication unit is stored in the storage unit of the Internet of Vehicles terminal, so that a capacity of the storage unit of the Internet of Vehicles terminal can be fully utilized, thereby reducing resource waste of the storage unit of the Internet of Vehicles terminal.

In some optional examples, the storage unit is the first storage unit mentioned below, the storage subunit is the second storage unit mentioned below, the first-type data is the personalized data mentioned below, and the second-type data is the common data mentioned below.

In some optional examples, the storage unit may be an embedded multimedia card (embedded multimedia card, eMMC), and the capacity of the storage unit may be a standard specification of 4 GB, 8 GB, 16 GB, or 32 GB. The storage subunit may be a flash memory.

In some optional examples of the third aspect, the first-type data includes at least one of a boot program, firmware, or a system program of the communication unit, and the second-type data includes at least one of a transmit power calibration parameter, a receiver sensitivity calibration parameter, an error vector magnitude, and a baseband calibration parameter of the communication unit.

In some optional examples of the third aspect, in response to invoking the first-type data in the storage unit, the communication unit receives a radio frequency signal transmitted by a transmitting end; or the communication unit transmits a to-be-transmitted signal to a receiving end.

In some specific implementations, the Internet of Vehicles terminal further includes a processor, and the communication unit further includes a radio frequency component. When the processor loads and runs the first-type data from the storage unit, the communication unit is in an operating state. The radio frequency component is configured to receive a radio frequency signal transmitted by the transmitting end, perform filtering and demodulation processing on the radio frequency signal to obtain a baseband signal, and transmit the baseband signal to the processor. The processor is configured to generate data related to the baseband signal.

In some specific implementations, when the radio frequency signal is an image signal, the processor is configured to generate an image or a video.

In some specific implementations, the communication unit further includes a sub-processor. The radio frequency component is further configured to receive a to-be-transmitted signal transmitted by the sub-processor, perform encoding, modulation, and amplification processing on the to-be-transmitted signal to obtain a modulated signal, and transmit the modulated signal to the receiving end.

In the embodiments of this application, the first-type data is stored in the storage unit of the Internet of Vehicles terminal, so that reliance of the communication unit on the Internet of Vehicles terminal can be enhanced while manufacturing costs of the communication unit are reduced.

In some optional examples of the third aspect, the storage unit is further configured to store vehicle information, driving data, navigation data, an antenna resonance frequency threshold, and power management control logic.

In the embodiments of this application, the second-type data of the communication unit, the vehicle information, the driving data, the navigation data, the antenna resonance frequency threshold, and the power management control logic are stored in the storage unit of the Internet of Vehicles terminal, so that the capacity of the storage unit of the Internet of Vehicles terminal can be fully utilized, thereby reducing resource waste of the storage unit of the Internet of Vehicles terminal.

In some optional examples of the third aspect, in response to invoking the antenna resonance frequency threshold in the storage unit, the communication unit controls, based on the antenna resonance frequency threshold and a current resonance frequency of an antenna, the antenna to be disconnected or connected.

In the embodiments of this application, the second-type data of the communication unit, the vehicle information, the driving data, the navigation data, the antenna resonance frequency threshold, and the power management control logic are stored in the storage unit of the Internet of Vehicles terminal, so that reliance of the communication unit on the Internet of Vehicles terminal can be enhanced while the capacity of the storage unit of the Internet of Vehicles terminal is fully utilized and resource waste of the storage unit of the Internet of Vehicles terminal is reduced.

In some optional examples of the third aspect, in response to invoking the power management control logic in the storage unit, the communication unit is powered on, powered off, put into a sleep mode, or awakened.

In the embodiments of this application, the second-type data of the communication unit, the vehicle information, the driving data, the navigation data, the antenna resonance frequency threshold, and the power management control logic are stored in the storage unit of the Internet of Vehicles terminal, so that reliance of the communication unit on the Internet of Vehicles terminal can be enhanced while the capacity of the storage unit of the Internet of Vehicles terminal is fully utilized and resource waste of the storage unit of the Internet of Vehicles terminal is reduced.

### BRIEF DESCRIPTION OF DRAWINGS

FIG. 1 shows a diagram of an Internet of Vehicles scenario according to some examples of this application;
FIG. 2 shows a diagram of a telematics box according to some examples of this application;
FIG. 3A shows a schematic flowchart of a manufacturing process of a telematics box according to some examples of this application;
FIG. 3B shows a schematic flowchart of another manufacturing process of a telematics box according to some examples of this application;
FIG. 4A and FIG. 4B show a schematic flowchart of a manufacturing process of a telematics box according to some examples of this application; and
FIG. 5 shows a diagram of a structure of a vehicle according to some examples of this application.

### DESCRIPTION OF EMBODIMENTS

The illustrative embodiments of this application include but are not limited to an Internet of Vehicles terminal, a communication unit, and a vehicle.

It may be understood that the communication unit mentioned in the embodiments of this application may be any unit with a function of communication, such as a mobile communication unit or a wireless communication unit.

It may be understood that the communication unit mentioned in the embodiments of this application is applicable to a telematics box.

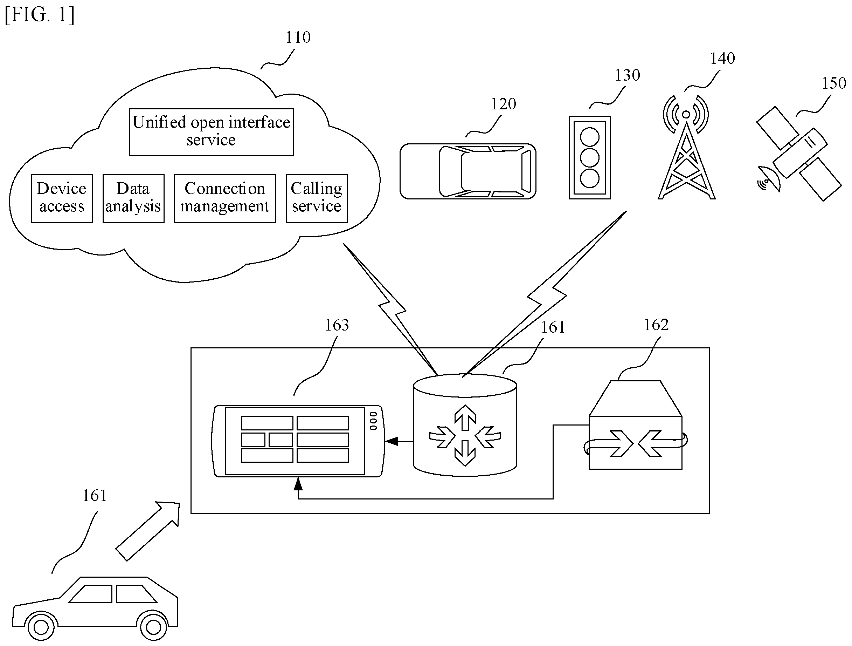

The following describes an Internet of Vehicles scenario. FIG. 1 shows a diagram of an Internet of Vehicles scenario. As shown in FIG. 1, the Internet of Vehicles scenario includes a cloud platform 110, another vehicle 120, roadside infrastructure 130, a base station 140, a global navigation satellite system (global navigation satellite system, GNSS) 150, and a vehicle 160. The vehicle 160 includes a telematics box 161, a vehicle body network 162, and an in-vehicle central control unit 163.

The cloud platform 110 may provide services such as a unified open interface, device access, data analysis, connection management, and calling.

In some specific implementations, the telematics box 161 may receive an electromagnetic wave signal (such as an image signal) transmitted by any one of the cloud platform 110, the another vehicle 120, the roadside infrastructure 130, the base station 140, and the global navigation satellite system 150, perform processing such as filtering and demodulation on the electromagnetic wave signal to obtain a low-frequency baseband signal, and transmit the low-frequency baseband signal to the in-vehicle central control unit 163 through a network bus, for example, a controller area network (controller area network, CAN) bus, a local interconnect network (local interconnect network, LIN) bus, a FlexRay bus, a media oriented system transport (media oriented system transport, MOST) bus, a universal serial bus (universal serial bus, USB), or Ethernet for related processing. For example, the in-vehicle central control unit 163 may control a central control screen of the vehicle 160 to display an image or a video corresponding to the image signal.

In some other specific implementations, the telematics box 161 may receive a to-be-transmitted signal (for example, a location signal) transmitted by the in-vehicle central control unit 163, perform processing such as modulation and amplification on the to-be-transmitted signal to obtain a radio frequency signal, and transmit the radio frequency signal to any one of the cloud platform 110, the another vehicle 120, the roadside infrastructure 130, the base station 140, and the global navigation satellite system 150. For example, the telematics box 161 may transmit the radio frequency signal corresponding to the location signal to another vehicle, so that the another vehicle performs driving route planning.

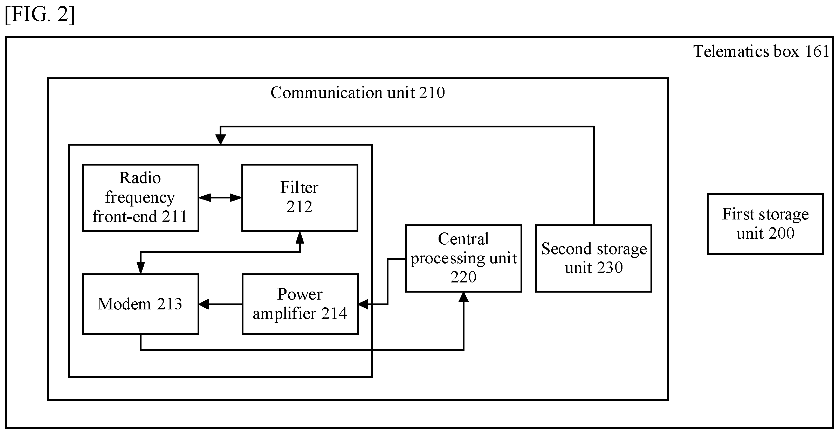

The following describes the telematics box 161 in detail with reference to FIG. 2. As described above, the telematics box 161 may include a first storage unit 200 and a communication unit 210.

The first storage unit 200 may be an embedded multimedia card. The capacity of the first storage unit 200 may be a standard specification of 4 GB, 8 GB, 16 GB, or 32 GB. The first storage unit 200 may store data such as vehicle information (a vehicle identification number, a vehicle model, and the like), driving data (a driving speed, fuel consumption, and the like), and navigation data (such as current location data of the vehicle and historical driving trajectories).

The communication unit 210 may include radio frequency components such as a radio frequency front-end (radio frequency front-end, RFFE) 211, a filter 212, a modem 213, and a power amplifier 214. The radio frequency components such as the radio frequency front-end 211, the filter 212, the modem 213, and the power amplifier 214 may be integrated on a radio frequency integrated circuit (radio frequency integrated circuit, RFIC). The communication unit 210 may further include a central processing unit (central processing unit, CPU) 220 and a second storage unit 230.

In some optional examples, the telematics box may further include units such as an antenna diagnostic unit, a power management unit, a Wi-Fi unit, an Ethernet unit, a Bluetooth unit, and a GNSS unit.

In some embodiments, the second storage unit 230 may store calibration parameters of radio frequency components such as the radio frequency front-end (radio frequency front-end, RFFE) 211, the filter 212, the modem 213, and the power amplifier 214, and store data such as a boot program (BOOT image) for booting the communication unit 210, a firmware software package, and a system program. Because the capacity required by the boot program (BOOT image), the firmware software package, the system program, and the like of the communication unit 210 is relatively large, the second storage unit 230 of the communication unit 210 requires a relatively large capacity. In this way, storing the calibration parameters of the radio frequency components and the data such as the boot program (BOOT image) for booting the communication unit 210, the firmware software package, and the system program in the second storage unit 230 of the communication unit 210 not only increases manufacturing costs of the communication unit 210, but also causes resource waste of the first storage unit 200 in the telematics box 161.

To resolve the foregoing problem, embodiments of this application provide a communication unit. Data that needs to be stored in a storage unit of the communication unit is split to obtain personalized data (such as a radio frequency calibration parameter and a baseband calibration parameter) and common data (such as a boot program (BOOT image), a firmware software package, and a system program) of the communication unit. The personalized data of the communication unit is stored in the storage unit of the communication unit, and the common data of the communication unit is stored in a storage unit of an in-vehicle TBox. In this way, only the personalized data of the communication unit is stored in the storage unit of the communication unit, and the communication unit only needs to be provided with a storage unit having a relatively small capacity, so that manufacturing costs of the communication unit can be reduced. In addition, the common data of the communication unit is stored in the storage unit of the in-vehicle TBox, so that a capacity of the storage unit of the in-vehicle TBox can be fully utilized, thereby reducing resource waste of the storage unit of the in-vehicle TBox.

It may be understood that the personalized data may include calibration parameters of radio frequency components in the communication unit, such as a transmit power, a receiver sensitivity, or an error vector magnitude (error vector magnitude, EVM). A larger transmit power indicates a wider coverage area and stronger penetration of a radio frequency signal. The receiver sensitivity is a minimum power of a radio frequency signal that can be detected by the communication unit. The error vector magnitude is used to evaluate quality of a modulated signal. A smaller error vector magnitude indicates a smaller difference between a modulated signal and an ideal modulated signal.

The following describes in detail the communication unit 210 mentioned in the embodiments of this application.

Still as shown in FIG. 2, the communication unit 210 may include the second storage unit 230, and the second storage unit 230 may store calibration parameters of radio frequency components in the communication unit 210. For example, the second storage unit 230 may store transmit power calibration parameters of the radio frequency components. For example, the transmit power calibration parameters may include a gain calibration parameter, and the gain calibration parameter may be used to calibrate a gain of the power amplifier 214 in the radio frequency components, so that the gain of the power amplifier 214 can reach an expected gain, and a power of a radio frequency signal transmitted by the communication unit can reach an expected power.

As described above, the communication unit 210 may further include radio frequency components such as the radio frequency front-end 211, the filter 212, the modem 213, and the power amplifier 214, and the central processing unit 220.

In some specific implementations, the radio frequency front-end 211 may receive, through an antenna port, radio frequency signals transmitted by a transmitting end (for example, the cloud platform 110, the another vehicle 120, the roadside infrastructure 130, the base station 140, or the global navigation satellite system 150 in FIG. 1). The filter 212 may perform filtering processing on the radio frequency signals, that is, selectively pass or suppress radio frequency signals within a specific frequency range, to obtain a filtered radio frequency signal. The modem 213 may demodulate an original low-frequency baseband signal (for example, an image signal) from the filtered radio frequency signal, and transmit the original low-frequency baseband signal to the central processing unit 220. The central processing unit 220 may perform related processing based on the low-frequency baseband signal. For example, the central processing unit 220 may display, by using a display screen, an image or a video corresponding to the image signal.

In some other specific implementations, the central processing unit 220 may further transmit a to-be-transmitted signal (for example, a location signal of a vehicle) to the modem 213. The modem 213 may perform encoding processing on the to-be-transmitted signal to obtain a digital signal, load the digital signal to a high-frequency carrier to obtain a modulated signal whose frequency range is within a radio frequency range, and transmit the modulated signal to the power amplifier. For example, in amplitude shift keying modulation, when the digital signal is "1", the amplitude of the carrier is at a high level, and when the digital signal is "0", the amplitude of the carrier is at a low level. The power amplifier 214 may amplify the modulated signal to increase a power of the modulated signal, so as to ensure that the modulated signal can be received by a receiving end (for example, the cloud platform 110, the another vehicle 120, the roadside infrastructure 130, the base station 140, or the global navigation satellite system 150 in FIG. 1).

In actual application, due to factors such as manufacturing tolerance and temperature, performance of different communication units 210 manufactured based on the same production process is different. Therefore, to ensure the performance of the communication unit 210, when the communication unit 210 is shipped from a factory, a communication unit manufacturer needs to perform radio frequency calibration on the radio frequency components in the communication unit 210, and store calibration parameters of the radio frequency components obtained through the calibration in the second storage unit of the communication unit 210.

The calibration parameters may include calibration parameters such as a transmit power, a receiver sensitivity, and an error vector magnitude. A larger transmit power indicates a wider coverage area and stronger penetration of a radio frequency signal. The receiver sensitivity is a minimum power of an input signal that can be detected. The error vector magnitude is used to evaluate quality of a modulated signal. A smaller error vector magnitude indicates a smaller difference between a modulated signal and an ideal modulated signal.

In the embodiments of this application, only the calibration parameters of the radio frequency components in the communication unit 210 are stored in the second storage unit 230 of the communication unit 210, and the communication unit 210 only needs to be provided with a storage unit having a relatively small capacity, so that manufacturing costs of the communication unit 210 can be reduced.

As described above, in the embodiments of this application, the personalized data of the communication unit 210 is stored in the second storage unit 230, and the common data of the communication unit 210 is stored in the first storage unit 200 of the telematics box 161. The following describes in detail the telematics box mentioned in the embodiments of this application.

Still as shown in FIG. 2, in some embodiments, the telematics box 161 may include the first storage unit 200 and the communication unit 210. The first storage unit 200 may store data, such as a boot program (BOOT image), a firmware software package, and a system program of the communication unit 210, vehicle information (a vehicle identification number, a vehicle model, and the like), driving data (a driving speed, fuel consumption, and the like), navigation data (such as current location data of the vehicle and historical driving trajectories), an antenna resonance frequency threshold, and power management control logic. The communication unit 210 may include the second storage unit 230, and the second storage unit 230 may store a calibration parameter of a radio frequency component in the communication unit 210.

In some specific implementations, in response to invoking the antenna resonance frequency threshold in the first storage unit 200, the communication unit 210 may control, based on the antenna resonance frequency threshold and a current resonance frequency of an antenna, the antenna to be disconnected or connected. For example, when the current resonance frequency of the antenna is greater than the antenna resonance frequency threshold, the communication unit controls the antenna to be connected. When the current resonance frequency of the antenna is less than or equal to the antenna resonance frequency threshold, the communication unit controls the antenna to be disconnected.

In some other specific implementations, the communication unit 210 may be powered on, powered off, put into a sleep mode, or awakened in response to invoking the power management control logic in the first storage unit 200.

In the embodiments of this application, only the calibration parameters of the radio frequency components in the communication unit 210 are stored in the second storage unit 230 of the communication unit 210, and the communication unit 210 only needs to be provided with a storage unit having a relatively small capacity, so that manufacturing costs of the communication unit 210 can be reduced. In addition, the boot program (BOOT image), the firmware software package, the system program, and the like of the communication unit 210 are stored in the first storage unit 200 of the telematics box 161, so that a capacity of the first storage unit 200 of the telematics box 161 can be fully utilized, thereby reducing resource waste of the first storage unit 200 of the telematics box 161.

The following describes manufacturing processes of telematics boxes in different embodiments.

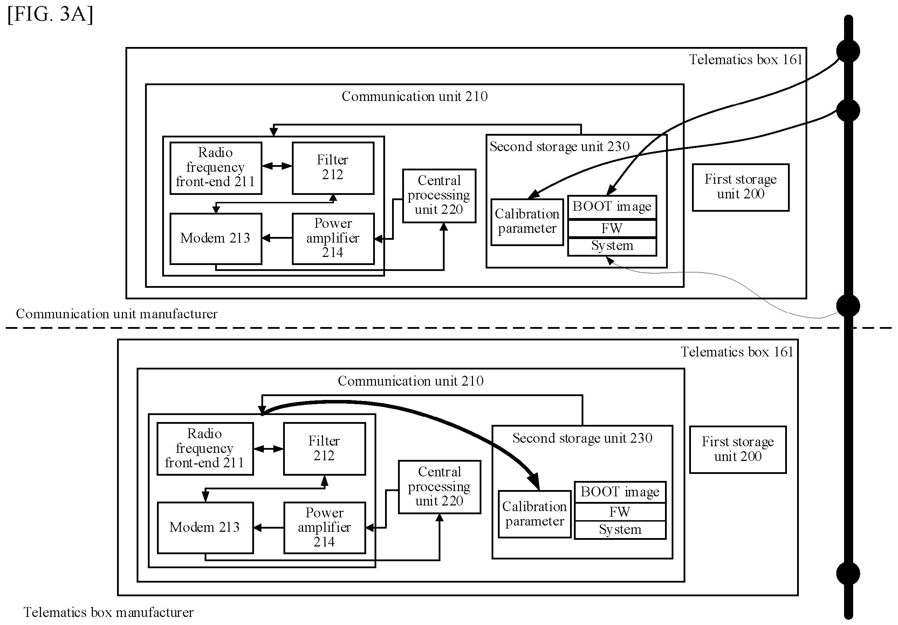

As shown in FIG. 3A, for a telematics box 161 in some embodiments, a common parameter of a communication unit 210 is stored in a second storage unit 230. Correspondingly, the manufacturing process of the telematics box 161 includes a plurality of phases, for example, may include a first phase, a second phase, a third phase, and a fourth phase.

In the first phase, a communication unit manufacturer solders the communication unit 210 onto a mainboard of the telematics box 161, and writes a boot program (BOOT image), a firmware software package, a system program, and the like of the communication unit 210 into the second storage unit 230 of the communication unit 210.

In the second phase, a processor on the mainboard of the telematics box 161 sends a boot instruction to a central processing unit 220 of the communication unit 210, and the central processing unit 220 may load and run the boot program (BOOT image), the firmware software package, the system program, and the like of the communication unit 210 from the second storage unit 230, so as to control the communication unit 210 to be in an operating state. Further, calibration parameters of radio frequency components may be obtained by detecting input and output data of the radio frequency components, and the calibration parameters of the radio frequency components are written into the second storage unit 230 of the communication unit 210.

The central processing unit 220 may transmit a to-be-transmitted signal (for example, a location signal of a vehicle) to a modem 213. The modem 213 may perform encoding processing on the to-be-transmitted signal to obtain a digital signal, load the digital signal to a high-frequency carrier to obtain a modulated signal whose frequency range is within a radio frequency range, and transmit the modulated signal to a power amplifier. The power amplifier may amplify the modulated signal to increase a power of the modulated signal. At this time, the power of the modulated signal may be detected by a detection device, and a transmit power calibration parameter may be determined based on the power of the modulated signal and an expected power.

For example, a gain calibration parameter of the power amplifier is determined based on a difference between the power of the modulated signal and the expected power. The gain calibration parameter may be used to calibrate a gain of the power amplifier in the radio frequency components, so that the gain of the power amplifier can reach an expected gain, and a power of a radio frequency signal transmitted by the communication unit can reach an expected power.

In the third phase, the communication unit manufacturer may perform software upgrade processing on the boot program (BOOT image), the firmware software package, the system program, and the like of the communication unit 210 in the second storage unit 230, to ensure that the boot program (BOOT image), the firmware software package, the system program, and the like stored in the second storage unit 230 can control the communication unit 210 to be in an operating state.

In the fourth phase, a telematics box manufacturer may perform software upgrade processing on the boot program (BOOT image), the firmware software package, the system program, and the like of the communication unit 210 in the second storage unit 230, to further ensure that the boot program (BOOT image), the firmware software package, the system program, and the like stored in the second storage unit 230 can control the communication unit 210 to be in an operating state.

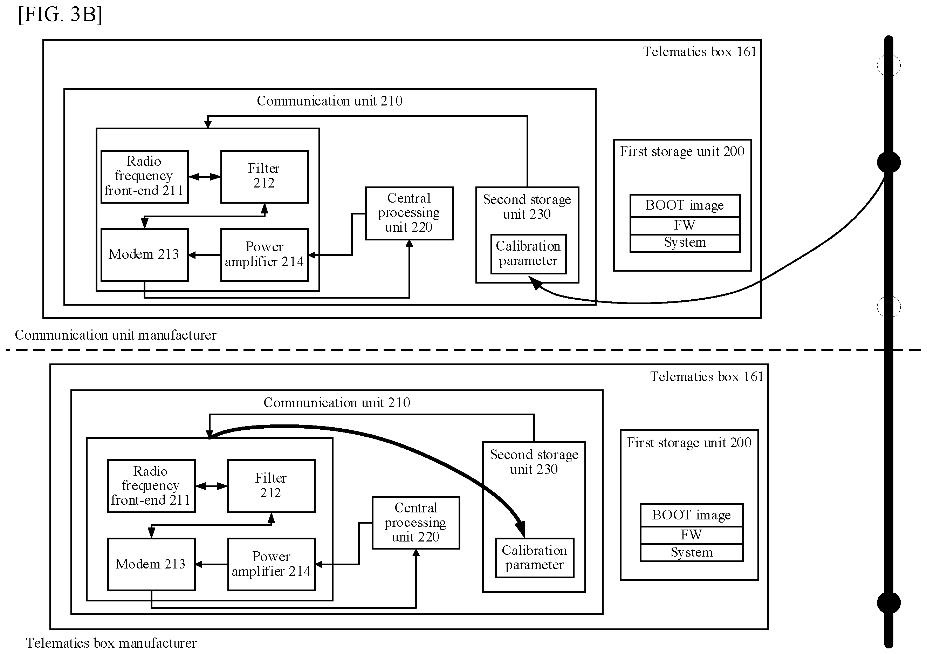

As shown in FIG. 3B, for a telematics box 161 in some other embodiments, a common parameter of a communication unit 210 is stored in a first storage unit 200. Compared with the manufacturing process of the telematics box 161 in some of the foregoing embodiments, the communication unit manufacturer may streamline the first phase and the third phase to further reduce manual manufacturing costs of the communication unit 210.

In addition, in the second phase, the communication unit manufacturer may write a boot program (BOOT image), a firmware software package, a system program, and the like of the communication unit 210 into a storage unit on a test mainboard, and may connect the communication unit 210 to the test mainboard via a fixture and a pogo pin. A processor on the test mainboard may load and run the boot program (BOOT image), the firmware software package, the system program, and the like of the communication unit 210, so as to control the communication unit 210 to be in an operating state. Further, calibration parameters of radio frequency components may be obtained by detecting input and output data of the radio frequency components, and the calibration parameters of the radio frequency components are written into the second storage unit 230 of the communication unit 210.

In the fourth phase, a telematics box manufacturer solders the communication unit 210 onto a mainboard of the telematics box 161, writes packages such as the boot program (BOOT image), the firmware software package, and the system program that are delivered by the communication unit manufacturer together with the communication unit 210 into the first storage unit 200 of the telematics box 161, and performs software upgrade processing on the boot program (BOOT image), the firmware software package, the system program, and the like of the communication unit 210 in the first storage unit 200, to further ensure that the boot program (BOOT image), the firmware software package, the system program, and the like stored in the first storage unit 200 can control the communication unit 210 to be in an operating state.

The following describes in detail a manufacturing process of the telematics box 161 mentioned in the embodiments of this application.

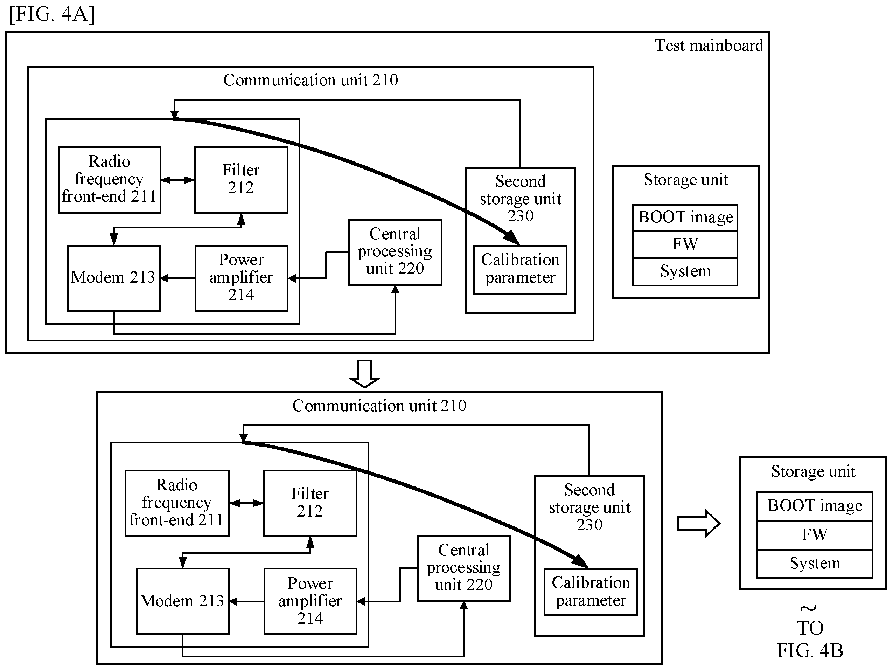

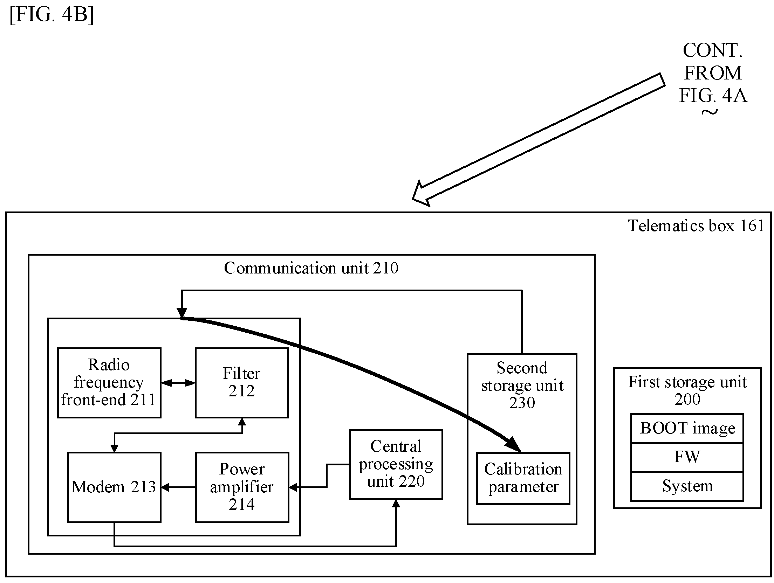

As shown in FIG. 4A and FIG. 4B, in a production line (that is, the second phase mentioned above), the boot program (BOOT image), the firmware software package, the system program, and the like of the communication unit 210 may be written into the storage unit of the test mainboard. In addition, the communication unit 210 may be connected to the test mainboard via a fixture and a pogo pin, so that the communication unit 210 can be normally powered on and perform radio frequency component calibration under control of the processor on the test mainboard.

In some optional examples, the processor on the mainboard of the telematics box 161 sends a start instruction to the central processing unit 220 of the communication unit 210, and the central processing unit 220 may load and run the boot program (BOOT image), the firmware software package, the system program, and the like of the communication unit 210 from the second storage unit 230, so as to control the communication unit 210 to be in an operating state. Further, the calibration parameters of the radio frequency components may be obtained by detecting the input and output data of the radio frequency components, and the calibration parameters of the radio frequency components are written into the second storage unit 230 of the communication unit 210. Then, the boot program (BOOT image), the firmware software package, the system program, and the like of the communication unit 210 may be delivered together with the communication unit 210 to the telematics box manufacturer.

The central processing unit 220 may transmit a to-be-transmitted signal (for example, a location signal of a vehicle) to the modem 213. The modem 213 may perform encoding processing on the to-be-transmitted signal to obtain a digital signal, load the digital signal to a high-frequency carrier to obtain a modulated signal whose frequency range is within a radio frequency range, and transmit the modulated signal to the power amplifier. The power amplifier may amplify the modulated signal to increase a power of the modulated signal. At this time, the power of the modulated signal may be detected by a detection device, and a transmit power calibration parameter may be determined based on the power of the modulated signal and an expected power.

For example, a gain calibration parameter of the power amplifier is determined based on a difference between the power of the modulated signal and the expected power. The gain calibration parameter may be used to calibrate a gain of the power amplifier in the radio frequency components, so that the gain of the power amplifier can reach an expected gain, and a power of a radio frequency signal transmitted by the communication unit can reach an expected power.

Then, the telematics box manufacturer solders the communication unit 210 onto the mainboard of the telematics box 161, writes packages such as the boot program (BOOT image), the firmware software package, and the system program that are delivered by the communication unit manufacturer together with the communication unit 210 into the first storage unit 200 of the telematics box 161, and performs software upgrade processing on the boot program (BOOT image), the firmware software package, the system program, and the like of the communication unit 210 in the first storage unit 200, to further ensure that the boot program (BOOT image), the firmware software package, the system program, and the like stored in the first storage unit 200 can control the communication unit 210 to be in an operating state.

In a process of using the telematics box, if a processor (not shown in the figure) in the telematics box 161 loads and runs the boot program (BOOT image), the firmware software package, the system program, and the like of the communication unit 210 from the first storage unit 200, the communication unit 210 may be controlled to be in an operating state.

In some specific implementations, the filter 212 in the communication unit 210 may perform filtering processing on radio frequency signals transmitted by a transmitting end (for example, the cloud platform 110, the another vehicle 120, the roadside infrastructure 130, the base station 140, or the global navigation satellite system 150 in FIG. 1), that is, selectively pass or suppress radio frequency signals within a specific frequency range, to obtain a filtered radio frequency signal. The modem 213 may demodulate an original low-frequency baseband signal (for example, an image signal) from the filtered radio frequency signal, and transmit the original low-frequency baseband signal to the central processing unit 220. The central processing unit 220 in the communication unit 210 may return the low-frequency baseband signal to the processor in the telematics box 161, and the processor in the telematics box 161 may perform related processing based on the low-frequency baseband signal. For example, an image or a video corresponding to the image signal is generated, and the processed signal is transmitted to an in-vehicle central control unit 180 via a network bus, such as a controller area network (controller area network, CAN) bus, a local interconnect network (local interconnect network, LIN) bus, a FlexRay bus, a media oriented system transport (media oriented system transport, MOST) bus, a universal serial bus (universal serial bus, USB), or Ethernet, so that the in-vehicle central control unit 180 may display the image or the video corresponding to the image signal.

In some other specific implementations, the central processing unit 220 may further transmit a to-be-transmitted signal (for example, a location signal of a vehicle) to the modem 213. The modem 213 may perform encoding processing on the to-be-transmitted signal to obtain a digital signal, load the digital signal to a high-frequency carrier to obtain a modulated signal whose frequency range is within a radio frequency range, and transmit the modulated signal to the power amplifier. The power amplifier may amplify the modulated signal to increase a power of the modulated signal, so as to ensure that the modulated signal can be received by a receiving end (for example, the cloud platform 110, the another vehicle 120, the roadside infrastructure 130, the base station 140, or the global navigation satellite system 150 in FIG. 1).

In the embodiments of this application, for the communication unit manufacturer, the first phase and the third phase in the existing solution are streamlined to further reduce manual manufacturing costs of the communication unit 210. In addition, only the calibration parameters of the radio frequency components in the communication unit 210 are stored in the second storage unit 230 of the communication unit 210, and the communication unit 210 only needs to be provided with a storage unit having a relatively small capacity, so that manufacturing costs of the communication unit 210 can be reduced. For the telematics box manufacturer, the boot program (BOOT image), the firmware software package, the system program, and the like of the communication unit 210 are stored in the first storage unit 200 of the telematics box 161, so that a capacity of the first storage unit 200 of the telematics box 161 can be fully utilized, thereby reducing resource waste of the first storage unit 200 of the telematics box 161.

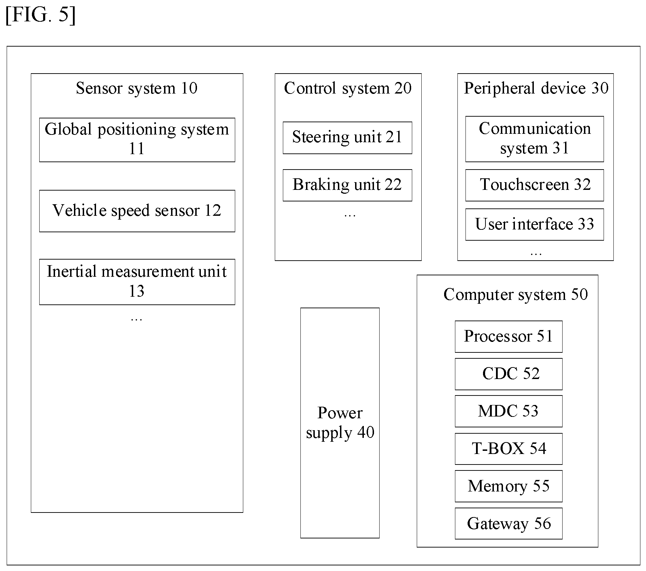

The following describes a structure of a vehicle with reference to FIG. 5. FIG. 5 shows a diagram of a structure of a vehicle according to embodiments of this application.

FIG. 5 is a diagram of a possible functional framework of a vehicle according to embodiments of this application. As shown in FIG. 5, the functional framework of the vehicle may include multiple subsystems, for example, a sensor system 10, a control system 20, one or more peripheral devices 30 (one is shown as an example in the figure), a power supply 40, and a computer system 50. Optionally, the vehicle may further include another functional system, for example, an engine system that provides power for the vehicle. This is not limited in this application.

The sensor system 10 may include a plurality of detection apparatuses. The detection apparatuses can sense measured information, and convert, according to a specific rule, the sensed information into an electrical signal or information in another required form for output. As shown in FIG. 5, the detection apparatuses may include a global positioning system (global positioning system, GPS) 11, a vehicle speed sensor 12, an inertial measurement unit (inertial measurement unit, IMU) 13, and the like. This is not limited in this application.

The global positioning system GPS 11 is a system that performs real-time positioning and navigation on a global scale through GPS positioning satellites. In this application, the global positioning system GPS 11 may be configured to perform real-time positioning of the vehicle, and provide geographical location information of the vehicle. The vehicle speed sensor 12 is configured to detect a driving speed of the vehicle. The inertial measurement unit 13 may include a combination of an accelerometer and a gyroscope, and is an apparatus that measures an angular rate and an acceleration of the vehicle. For example, in a traveling process of the vehicle, the inertial measurement unit may measure a position and an angle change of the vehicle body based on inertial acceleration of the vehicle, for example, measure an acceleration and an angular rate of the vehicle.

The control system 20 may include a steering unit 21, a braking unit 22, and the like.

The steering unit 21 may represent a system configured to adjust a driving direction of the vehicle and may include but is not limited to a steering wheel, or any other structural device configured to adjust or control the driving direction of the vehicle. The braking unit 22 may represent a system configured to slow down a driving speed of the vehicle, and may also be referred to as a vehicle braking system. The braking unit 22 may include but is not limited to a brake controller, a decelerator, or any other structural device configured to decelerate the vehicle. In actual application, the braking unit 22 may reduce rotation of vehicle tires through friction, to slow down the driving speed of the vehicle.

The peripheral device 30 may include a plurality of components, for example, a communication system 31, a touchscreen 32, and a user interface 33 in the figure. The communication system 31 is configured to implement network communication between the vehicle and another device other than the vehicle, for example, an electronic device 2. In actual application, the communication system 31 may use a wireless communication technology or a wired communication technology to implement network communication between the vehicle and the another device. The wired communication technology may mean that the vehicle communicates with the another device through a network cable, an optical fiber, or the like. The wireless communication technology includes but is not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), wireless local area networks (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

The touchscreen 32 may be configured to detect an operation instruction on the touchscreen 32. For example, a user performs, based on an actual requirement, a touch operation on content data displayed on the touchscreen 32, to implement a function corresponding to the touch operation, for example, playing a multimedia file such as music or a video. The user interface 33 may be specifically a touch panel configured to detect an operation instruction on the touch panel. The user interface 33 may alternatively be a physical button or a mouse. The user interface 33 may alternatively be a display configured to output data and display an image or data. Optionally, the user interface 33 may alternatively be at least one device belonging to the category of peripheral devices, such as a touchscreen, a microphone, and a speaker.

A plurality of functions of the vehicle are all implemented through control by the computer system 50. The computer system 50 may include a plurality of processors such as a general-purpose processor 51, a CDC 52, an MDC 53, a T-BOX 54, a memory 55 (which may also be referred to as a storage apparatus), and a gateway 56. In actual application, the memory 55 may be inside the computer system 50, or may be outside the computer system 50, for example, may be used as a cache in the vehicle. This is not limited in this application.

The general-purpose processor 51 may be, for example, a graphic processing unit (graphic processing unit, GPU). The general-purpose processor 51, the CDC 52, the MDC 53, and the T-BOX 54 may be configured to run a related program stored in the memory 55 or an instruction corresponding to the program, to implement a corresponding function of the vehicle, for example, a network switching function on a per-service basis.

The T-BOX 54 may include a first storage unit 200 and a communication unit 210. The first storage unit 200 may be an embedded multimedia card. A capacity of the first storage unit 200 may be a standard specification of 4 GB, 8 GB, 16 GB, or 32 GB. The first storage unit 200 may store data such as vehicle information (a vehicle identification number, a vehicle model, and the like), driving data (a driving speed, fuel consumption, and the like), and navigation data (such as current location data of the vehicle and historical driving trajectories). The communication unit 210 may include radio frequency components such as a radio frequency front-end (radio frequency front-end, RFFE) 211, a filter 212, a modem 213, and a power amplifier 214. The radio frequency components such as the radio frequency front-end 211, the filter 212, the modem 213, and the power amplifier 214 may be integrated on a radio frequency integrated circuit (radio frequency integrated circuit, RFIC). The communication unit 210 may further include a central processing unit (central processing unit, CPU) 220 and a second storage unit 230. The second storage unit 230 may store calibration parameters of the radio frequency components such as the radio frequency front-end (radio frequency front-end, RFFE) 211, the filter 212, the modem 213, and the power amplifier 214.

The memory 55 may include a volatile memory (volatile memory), such as a RAM. The memory may alternatively include a non-volatile memory (non-volatile memory), such as a ROM, a flash memory (flash memory), an HDD, or a solid-state drive SSD. The memory 55 may alternatively include a combination of the foregoing types of memories. The memory 55 may be configured to store a set of program code or instructions corresponding to the program code, so that the processor 51 invokes the program code or instructions stored in the memory 55 to implement corresponding functions of the vehicle. The functions include but are not limited to some or all of the functions in the diagram of the functional framework of the vehicle shown in FIG. 5. In this application, the memory 55 may store a set of program code used for vehicle control, and the general-purpose processor 51, the CDC 52, the MDC 53, and the T-BOX 54 may control the vehicle to perform vehicle network switching in this application by invoking the program code.

Optionally, in addition to storing the program code or instructions, the memory 55 may further store information such as a road map, a driving route, and sensor data. The computer system 50 may implement a vehicle-related function in combination with another component in the diagram of the functional framework of the vehicle, such as a sensor and the GPS in the sensor system. For example, the computer system 50 may control the driving direction or the driving speed of the vehicle based on data input of the sensor system 10. This is not limited in this application.

It may be understood that the structure shown in this application does not constitute a specific limitation on the vehicle. In some other embodiments, the vehicle may include more or fewer components than those shown in the figure, or combine specific components, or split specific components, or have a different arrangement of components. The components shown in the figure may be implemented by hardware, software, or a combination of software and hardware.

It should be noted that: In the examples and specification of this patent, relational terms such as first and second are merely used to distinguish one entity or operation from another entity or operation, and do not necessarily require or imply any such actual relationship or order between these entities or operations. Moreover, the terms "comprise", "include" or any other variants thereof are intended to cover a non-exclusive inclusion, so that a process, a method, an article, or a device that includes a list of elements not only includes those elements but also includes other elements that are not expressly listed, or further includes elements inherent to such process, method, article, or device. Without further limitations, an element limited by "include a/an" does not exclude other same elements existing in the process, the method, the article, or the device which includes the element.

Although this application has been illustrated and described with reference to specific embodiments of this application, a person of ordinary skill in the art should understand that various changes in form and details may be made therein without departing from the scope of this application.

## Claims

1. An Internet of Vehicles terminal, wherein the Internet of Vehicles terminal comprises a storage unit and a communication unit, and the communication unit comprises a storage subunit; the storage unit is configured to store first-type data of the communication unit, and the storage subunit is configured to store second-type data of the communication unit; and the first-type data is used to boot the communication unit, and the second-type data is used to calibrate a first parameter of the communication unit to a second parameter.

2. The Internet of Vehicles terminal according to claim 1, wherein the first-type data comprises at least one of a boot program, firmware, or a system program of the communication unit; and the second-type data comprises at least one of a transmit power calibration parameter, a receiver sensitivity calibration parameter, an error vector magnitude, and a baseband calibration parameter of the communication unit.

3. The Internet of Vehicles terminal according to claim 1, wherein in response to invoking the first-type data in the storage unit, the communication unit receives a radio frequency signal transmitted by a transmitting end; or the communication unit transmits a to-be-transmitted signal to a receiving end.

4. The Internet of Vehicles terminal according to claim 1, wherein the storage unit is further configured to store vehicle information, driving data, navigation data, an antenna resonance frequency threshold, and power management control logic.

5. The Internet of Vehicles terminal according to claim 4, wherein in response to invoking the antenna resonance frequency threshold in the storage unit, the communication unit controls, based on the antenna resonance frequency threshold and a current resonance frequency of an antenna, the antenna to be disconnected or connected.

6. The Internet of Vehicles terminal according to claim 4, wherein in response to invoking the power management control logic in the storage unit, the communication unit is powered on, powered off, put into a sleep mode, or awakened.

7. A communication unit, wherein data related to the communication unit comprises first-type data and second-type data; the first-type data is stored in a storage unit of an Internet of Vehicles terminal, and the first-type data is used to boot the communication unit; and the communication unit comprises a storage subunit, the storage subunit is configured to store the second-type data of the communication unit, and the second-type data is used to calibrate a first parameter of the communication unit to a second parameter.

8. The communication unit according to claim 7, wherein the second-type data comprises at least one of a transmit power calibration parameter, a receiver sensitivity calibration parameter, an error vector magnitude, and a baseband calibration parameter of the communication unit.

9. The communication unit according to claim 7, wherein in response to invoking the first-type data in the storage unit, the communication unit receives a radio frequency signal transmitted by a transmitting end; or the communication unit transmits a to-be-transmitted signal to a receiving end.

10. The communication unit according to claim 7, wherein the storage unit is further configured to store vehicle information, driving data, navigation data, an antenna resonance frequency threshold, and power management control logic.

11. The communication unit according to claim 10, wherein in response to invoking the antenna resonance frequency threshold in the storage unit, the communication unit controls, based on the antenna resonance frequency threshold and a current resonance frequency of an antenna, the antenna to be disconnected or connected.

12. The communication unit according to claim 10, wherein in response to invoking the power management control logic in the storage unit, the communication unit is powered on, powered off, put into a sleep mode, or awakened.

13. A vehicle, wherein the vehicle comprises an Internet of Vehicles terminal, the Internet of Vehicles terminal comprises a storage unit and a communication unit, and the communication unit comprises a storage subunit; the storage unit is configured to store first-type data of the communication unit, and the storage subunit is configured to store second-type data of the communication unit; and the first-type data is used to boot the communication unit, and the second-type data is used to calibrate a first parameter of the communication unit to a second parameter.

14. The vehicle according to claim 13, wherein the first-type data comprises at least one of a boot program, firmware, or a system program of the communication unit; and the second-type data comprises at least one of a transmit power calibration parameter, a receiver sensitivity calibration parameter, an error vector magnitude, and a baseband calibration parameter of the communication unit.

15. The vehicle according to claim 13, wherein in response to invoking the first-type data in the storage unit, the communication unit receives a radio frequency signal transmitted by a transmitting end; or the communication unit transmits a to-be-transmitted signal to a receiving end.

16. The vehicle according to claim 13, wherein the storage unit is further configured to store vehicle information, driving data, navigation data, an antenna resonance frequency threshold, and power management control logic.

17. The vehicle according to claim 16, wherein in response to invoking the antenna resonance frequency threshold in the storage unit, the communication unit controls, based on the antenna resonance frequency threshold and a current resonance frequency of an antenna, the antenna to be disconnected or connected.

18. The vehicle according to claim 16, wherein in response to invoking the power management control logic in the storage unit, the communication unit is powered on, powered off, put into a sleep mode, or awakened.
